# EUROPÄISCHE PATENTANMELDUNG

(11) **EP 1 358 963 A1**
(43) Veröffentlichungstag der Anmeldung: **05.11.2003**
(21) Anmeldenummer: 03003003.5
(22) Anmeldetag: 12.02.2003
(51) Int. Cl.: B23K 26/06, B23K 26/067, B23K 26/10, C21D 1/09, C21D 9/08, C21D 9/32, C21D 9/40

(54) **Verfahren zur Laser-Wärmebehandlung, insbesondere zum Härten, von Werkstücken**

(30) Priorität: 29.04.2002 DE 10218141
(71) Anmelder: C. Stiefelmayer GmbH & Co.KG, 73770 Denkendorf (DE)
(72) Erfinder: Meyer, Reinhold, 73066 Uhingen (DE)
(74) Vertreter: Kratzsch, Volkhard, Dipl.-Ing.

(57) **Zusammenfassung**

Die Erfindung betrifft ein Verfahren zur Laser-Wärmebehandlung von Werkstücken (10), insbesondere zum Härten, bei dem das Werkstück (10) von mehreren, jeweils separat steuerbaren Laserstrahlenbündeln (11,12) mit Relativbewegung zwischen diesen (11,12) und dem Werkstück (10) beaufschlagt wird, wodurch, beim Härten, eine erneute Wärmebeaufschlagung von zuvor bereits beaufschlagten Flächenbereichen und damit ein Anlassen in diesen Bereichen vermieden wird.

## Beschreibung

Die Erfindung bezieht sich auf ein Verfahren zur Laser-Wärmebehandlung von Werkstücken, insbesondere zum Härten.

Es ist bekannt, eine geschlossene Oberflächenbahn, z.B. eine zylindrische Oberfläche eines Werkstücks, mit einem Laserstrahlbündel durch Relativbewegung zwischen dem Werkstück und dem Laserstrahlbündel derart zu beaufschlagen, dass das Laserstrahlbündel eine Zylinderfläche bestimmten Axialmaßes auf der Oberseite des Werkstücks beaufschlagt. Hierbei besteht die Gefahr, dass nach Durchlaufen von etwa 360° dieser Oberflächenbahn der erreichte Oberflächenbereich, der gehärtet worden ist, erneut so temperaturbeaufschlagt wird, dass ein Anlassen geschieht und damit die Härte zunichte gemacht wird.

Der Erfindung liegt die Aufgabe zugrunde, ein Verfahren zur Laser-Wärmebehandlung von Werkstücken, insbesondere zum Härten, zu schaffen, bei dem im beaufschlagten Bereich des Werkstücks ein Anlassen und somit eine Anlasszone vermieden wird.

Die Aufgabe ist bei einem Verfahren der eingangs genannten Art gemäß der Erfindung dadurch gelöst, dass bei diesem Verfahren das Werkstück von mehreren jeweils separat steuerbaren Laserstrahlenbündeln mit Relativbewegung zwischen diesen und dem Werkstück beaufschlagt wird. Weitere Erfindungsmerkmale und Ausgestaltungen ergeben sich aus den Unteransprüchen.

Durch das Verfahren gemäß der Erfindung wird verhindert, dass bei der Wärmebehandlung von Werkstücken ein Oberflächenbereich, der bereite behandelt, insbesondere gehärtet, worden ist, im Verfolg der Behandlung so temperaturbeaufschlagt wird, dass ein unerwünschtes Anlassen geschieht und damit die angestrebte Wärlebehandlung, insbesondere Härtung, zunichte gemacht wird.

Weitere Einzelheiten und Vorteile der Erfindung ergeben sich aus der nachfolgenden Beschreibung.

Die Erfindung ist nachfolgend anhand von in den Zeichnungen gezeigten Ausführungsbeispielen näher erläutert. Es zeigen:
- Fig. 1 und 2: jeweils eine schematische perspektivische Ansicht von zwei Verfahrenszuständen beim Laserhärten eines Werkstückes gemäß einem ersten Ausführungsbeispiel,
- Fig. 3 bis 5: jeweils eine schematische perspektivische Ansicht eines Werkstücks beim Oberflächenhärten mittels Laser in einem Verfahrenszustand gemäß einem zweiten bzw. dritten bzw. vierten Ausführungsbeispiel.

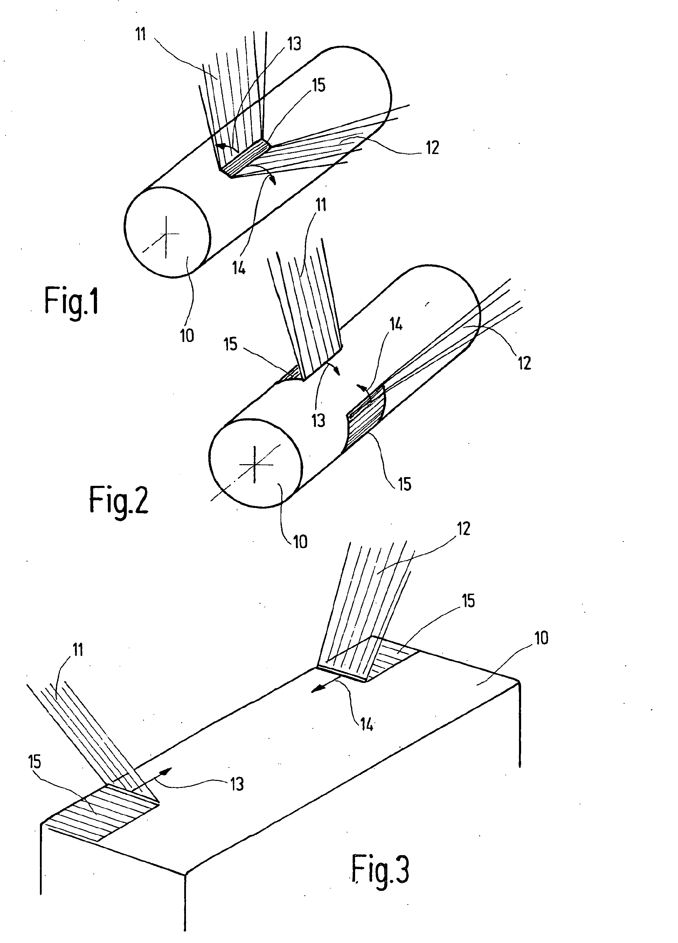

In Fig. 1 und 2 ist schematisch ein Werkstück 10 gezeigt, bei dem eine Wärmebehandlung, insbesondere ein Härten, vor allem ein Oberflächenhärten, mittels Laserstrahlenbündeln 11 und 12 geschieht. Hierbei wird das Werkstück 10 ersichtlich von mehreren, beim Beispiel in Fig. 1 und 2 von zwei, Laserstrahlenbündeln 11 und 12 mit Relativbewegung zwischen letzteren und dem Werkstück 10 beaufschlagt. In Fig. 1 und 2 werden bei feststehendem Werkstück 10 die Laserstrahlenbündel 11, 12 in Richtung der Pfeile 13 bzw. 14 bewegt. Hierbei erfolgt die Beaufschlagung mit den mehreren Laserstrahlenbündeln 11 und 12 zeitgleich. Die beiden Laserstrahlenbündel 11 und 12 werden in Fig. 1 und 2 dabei entlang einer gemeinsamen schematisch mit 15 angedeuteten Oberflächenbahn des Werkstücks 10 gegenläufig zueinander bewegt. Beim Ausführungsbeispiel in Fig. 1 und 2 ist diese Oberflächenbahn 15 gekrümmt, und zwar bei diesem Beispiel ringförmig geschlossen und hierbei insbesondere eine Kreisbahn. Dies resultiert daraus, dass das Werkstück 10 hierbei Zylinderform aufweist.

Die beiden gegenläufigen Laserstrahlenbündel 11 und 12 starten auf der Oberflächenbahn 15 von einer gemeinsamen Startlinie ausgehend, auf der sich die beiden Laserstrahlenbündel 11 und 12 im Bereich der Oberflächenbahn 15 treffen. Von dieser gemeinsamen Startlinie ausgehend werden die Laserstrahlenbündel 11 und 12 zueinander gegenläufig entlang der gekrümmten Oberflächenbahn 15 in Pfeilrichtung 13 bzw. 14 bewegt, wobei ein weiteres Verfahrensstadium hierbei in Fig. 2 gezeigt ist, wo die Laserstrahlenbündel 11, 12 einander bereits wieder genähert werden, bis sie sich schließlich in einer gemeinsamen Endlinie der Oberflächenbahn 15 treffen. Mit diesem Zusammentreffen in der gemeinsamen Endlinie wird die Beaufschlagung des Werkstücks 10 auf dieser behandelten Oberflächenbahn 15 beendet. Dabei kann die Intensität der beiden gegenläufigen Laserstrahlenbündel 11, 12 bei Erreichen der gemeinsamen Endlinie mit Vorteil verringert werden. Bei diesem zuvor geschilderten Verfahren wird beim Härten der geschlossenen Oberflächenbahn 15 vermieden, dass ein bereits gehärteter Bereich dieser Oberflächenbahn 15 erneut so temperaturbeaufschlagt wird, dass unter Beseitigung der erreichten Härte ein Anlassen in diesem Bereich geschieht.

Würde statt des geschilderten Verfahrens mit lediglich einem Laserstrahlenbündel 11 gearbeitet, das entlang der geschlossenen Oberflächenbahn 15 durch Relativbewegung zwischen dem Werkstück 10 und dem Laserstrahlenbündel 11 geführt wird, bestünde die Gefahr, dass nach Durchlaufen von etwa 360° dieser Oberflächenbahn 15 dieser erreichte Oberflächenbereich, der gehärtet worden ist, erneut so temperaturbeaufschlagt wird, dass ein Anlassen geschieht und damit die Härtung zunichte gemacht wird.

Dem wird durch gegenläufige Bewegung der beiden Laserstrahlenbündel 11, 12 beim Ausführungsbeispiel in Fig. 1 dadurch entgegengewirkt, dass beide Laserstrahlenbündel 11, 12 nach Bilden einer Härtespur von jeweils 180° des Durchmessers des Werkstücks 10 und beim Zusammentreffen auf der gemeinsamen Endlinie zeitgleich die jeweilige Oberflächenbehandlung des Werkstücks 10 beenden. Hierbei lässt sich nicht nur diese gemeinsame Endlinie verfahrenstechnisch ziemlich genau treffen und durch Steuerung beherrschen, sondern es kann hierbei zusätzlich durch Verringerung der Intensität der beiden Laserstrahlenbündel 11, 12 bei Erreichen der gemeinsamen Endlinie eine solche Temperaturbeeinflussung auf der Oberflächenbahn 15 gewährleistet werden, bei der kein Anlassen bereits gehärteter Zonen des Werkstücks 10 zu befürchten ist. Das erfindungsgemäße Verfahren ermöglicht somit in einfacher Weise eine Laserwärmebehandlung des Werkstücks 10, insbesondere ein Oberflächenhärten dieses, entlang der geschlossenen Oberflächenbahn 15, wobei auf sämtlichen Bereichen dieser Oberflächenbahn 15 die gleiche Härte erzeugt wird.

Bei dem in Fig. 3 gezeigten zweiten Ausführungsbeispiel hat das Werkstück 10 eine gerade Oberflächenbahn 15. Die beiden Laserstrahlenbündel 11 und 12 werden entlang dieser gemeinsamen geraden Oberflächenbahn 15 des Werkstücks 10 in Richtung der Pfeile 13, 14 gegenläufig zueinander bewegt. Die Laserstrahlenbündel 11, 12 starten ausgehend von in Abstand voneinander befindlichen Startlinien auf der Oberflächenbahn 15 des Werkstückes 10 und werden entlang dieser gemeinsamen Oberflächenbahn 15 so weit aufeinanderzu bewegt, bis sie sich in einer gemeinsamen Endlinie auf der Oberflächenbahn 15 treffen. Mit dem Zusammentreffen in der gemeinsamen Endlinie wird die Beaufschlagung des Werkstückes 10 auf dieser behandelten Oberflächenbahn 15 beendet. Es kann sich erforderlichenfalls dann ein weiterer Behandlungszyklus z.B. auf einer neben der Oberflächenbahn 15 befindlichen Nachbarbahn anschließen, bis schließlich die gesamte Oberfläche des Werkstücks 10 in Fig. 3 gehärtet ist. Auch bei dieser Variante des Verfahrens wird mit Vorteil die Intensität der beiden gegenläufigen Laserstrahlenbündel 11 und 12 bei Erreichen der gemeinsamen Endlinie verringert.

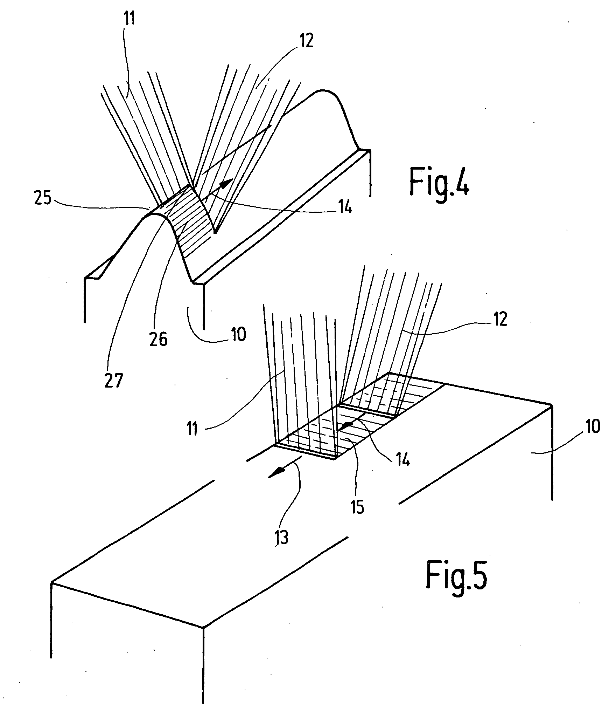

Bei dem in Fig. 4 gezeigten dritten Ausführungsbeispiel sind abweichend von Fig. 1 bis 3 einzelne Laserstrahlenbündel, und zwar beim gezeigten Ausführungsbeispiel wiederum zwei Laserstrahlenbündel 11 und 12, auf einzelnen zugeordneten, nebeneinander liegenden, aneinander anschließenden oder sich zumindest geringfügig überdeckenden Oberflächenbahnen 25 bzw. 26 des Werkstückes 10 wirksam. Die zumindest zwei nebeneinander wirksamen Laserstrahlenbündel 11 und 12 starten zeitgleich von zugeordneten, zumindest annähernd überdeckungslos aneinanderstoßenden Startlinien auf der Oberfläche des Werkstücks 10. Die Werkstückbeaufschlagung erfolgt mit einhergehender Relativverschiebung zwischen dem Werkstück 10 einerseits und den mindestens zwei Laserstrahlenbündeln 11, 12 andererseits, wobei beim Beispiel in Fig. 4 z.B. letztere relativ zum stillstehenden Werkstück 10 in Richtung der zugeordneten Pfeile, von denen man nur den Pfeil 14 des Laserstrahlenbündels 12 erkennen kann, vorwärtsbewegt werden. Hierbei beaufschlagen die beiden Laserstrahlenbündel 11,12 zusammen eine davon bestimmte Oberflächenbahn 25, 26 des Werkstücks 10, die - verglichen mit der Wirkungsbreite nur eines Laserstrahlenbündels 11 oder 12 - die doppelte Breite aufweist. Die mindestens zwei Laserstrahlenbündel 11, 12 sind unter einem insbesondere spitzen Winkel zueinander geneigt und treffen unter diesem Winkel auf das Werkstück 10 auf. Der Wirkungsabstand der beiden nebeneinander angeordneten Laserstrahlenbündel 11, 12 zueinander wird während der gesamten Wärmebehandlungsphase konstant gehalten. Bei einer derartigen Wärmebehandlung des Werkstücks 10, insbesondere Oberflächenhärtung dieses, gemäß Fig. 4 bestünde bei Behandlung lediglich mittels eines Laserstrahlenbündels 11 im Bereich der Oberflächenbahn 25 und hiernach mittels des anderen Laserstrahlenbündels 12 auf der Oberflächenbahn 26 an der Stoßstelle dieser Oberflächenbahnen 25 und 26, die mit 27 angedeutet ist, die Gefahr, dass in diesem Bereich durch erneute Wärmeeinbringung auf Anlasstemperatur ein Anlassen unter Beseitigung der zuvor erreichten Härte geschieht. Dem wird beim erfindungsgemäßen Verfahren durch gemeinsames paralleles Führen der beiden Laserstrahlenbündel 11 und 12 angepasst an die Kontur des Werkstücks 10, z.B. dortige Biegeradien, Schneidspitzen od. dgl. Rechnung getragen, so dass die kritische Zone 27 anlasszonenfrei ist und somit beide Oberflächenbahnen 25 und 26, auch im Bereich der kritischen Zone 27, durchgehend die gleiche Härte aufweisen.

Bei dem in Fig. 5 gezeigten vierten Ausführungsbeispiel erfolgt die Wärmebehandlung des Werkzeuges 10 in der Weise, dass zumindest zwei Laserstrahlenbündel 11 und 12 in einem konstanten Abstand hintereinander auf einer gemeinsamen Oberflächenbahn 15 des Werkstückes 10 wirksam sind und bei der Relativbewegung zwischen dem Werkstück 10 einerseits und den Laserstrahlenbündeln 11, 12 andererseits nacheinander die gleiche Oberflächenbahn 15 des Werkstückes 10 beaufschlagen unter Steigerung der Tiefe der erfolgenden Wärmebehandlung, insbesondere der Härtetiefe.

Bei allen erläuterten Ausführungsbeispielen können die mehreren Laserstrahlenbündel 11, 12 und weitere z.B. von einer einzigen, nicht gezeigten Laserquelle erzeugt und von dieser ausgehend aufgeteilt und unterschiedlich gerichtet werden, z.B. mit optischen Mitteln.

Statt dessen können die einzelnen Laserstrahlenbündel 11, 12 aber auch von jeweils zugeordneten eigenen Laserquellen erzeugt werden.

## Patentansprüche

1. Verfahren zur Laser-Wärmebehandlung von Werkstücken (10), insbesondere zum Härten,
**dadurch gekennzeichnet,**
**dass** das Werkstück (10) von mehreren jeweils separat steuerbaren Laserstrahlenbündeln (11, 12) mit Relativbewegung zwischen diesen und dem Werkstück (10) beaufschlagt wird.

2. Verfahren nach Anspruch 1,
**dadurch gekennzeichnet,**
**dass** die Beaufschlagung mit den mehreren Laserstrahlenbündeln (11, 12) zeitgleich geschieht.

3. Verfahren nach Anspruch 1 oder 2,
**dadurch gekennzeichnet,**
**dass** die Beaufschlagung mit zumindest zwei Laserstrahlenbündeln (11, 12) geschieht.

4. Verfahren nach Anspruch 3,
**dadurch gekennzeichnet,**
**dass** zumindest zwei Laserstrahlenbündel (11, 12) entlang einer gemeinsamen geraden oder gekrümmten Oberflächenbahn (15) des Werkstücks (10) gegenläufig (Fig. 1 bis 3) zueinander bewegt werden.

5. Verfahren nach Anspruch 4,
**dadurch gekennzeichnet,**
**dass** die gegenläufigen Laserstrahlenbündel (11, 12) bei einer gekrümmten Oberfläche, insbesondere bei einer ringförmig geschlossenen Oberflächenbahn (15), z.B. Kreisbahn, des Werkstücks (10) von einer gemeinsamen Startlinie des Werkstückes (10) ausgehend starten und zueinander gegenläufig entlang der gekrümmten Oberflächenbahn (15, Fig. 1 bis 2) bewegt werden, bis sie sich in einer gemeinsamen Endlinie treffen, und dass mit dem Zusammentreffen in der gemeinsamen Endlinie die Beaufschlagung des Werkstücks (10) auf dieser behandelten Oberflächenbahn (15) beendet wird.

6. Verfahren nach Anspruch 4,
**dadurch gekennzeichnet,**
**dass** die gegenläufigen Laserstrahlenbündel (11, 12) bei einer geraden oder gekrümmten Oberflächenbahn (15) von in Abstand voneinander befindlichen verschiedenen Startlinien auf der Oberflächenbahn (15) des Werkstückes (10) ausgehend starten (Fig. 3) und entlang der gemeinsamen geraden oder gekrümmten Oberflächenbahn (15) aufeinanderzu bewegt werden, bis sie sich in einer gemeinsamen Endlinie treffen, und dass mit dem Zusammentreffen in der gemeinsamen Endlinie die Beaufschlagung des Werkstücks (10) auf dieser behandelten Oberflächenbahn (15) beendet wird.

7. Verfahren nach Anspruch 5 oder 6,
**dadurch gekennzeichnet,**
**dass** die Intensität der beiden gegenläufigen Laserstrahlenbündel (11,12) bei Erreichen der gemeinsamen Endlinie verringert wird.

8. Verfahren nach einem der Ansprüche 1 bis 3,
**dadurch gekennzeichnet,**
**dass** einzelne Laserstrahlenbündel (11, 12) auf einzelnen zugeordneten, nebeneinander liegenden, aneinander anschließenden oder sich zumindest geringfügig überdeckenden Oberflächenbahnen (25, 26) des Werkstücks (10) wirksam sind (Fig. 4).

9. Verfahren nach Anspruch 8,
**dadurch gekennzeichnet,**
**dass** zumindest zwei nebeneinander wirksame Laserstrahlenbündel (11, 12) zeitgleich von zugeordneten, zumindest annähernd überdeckungslos aneinander anstoßenden Startlinien auf der Oberfläche des Werkstückes (10) starten (Fig. 4).

10. Verfahren nach Anspruch 9,
**dadurch gekennzeichnet,**
**dass** ausgehend von der Beaufschlagung der aneinander anschließenden Startlinien eine Relativverschiebung zwischen dem Werkstück (10) einerseits und den mindestens zwei Laserstrahlenbündeln (11, 12) andererseits geschieht und die beiden Laserstrahlenbündel (11, 12) zusammen eine davon bestimmte, doppelt breite Oberflächenbahn (25, 26) des Werkstücks (10) beaufschlagen (Fig. 4).

11. Verfahren nach einem der Ansprüche 1 bis 10,
**dadurch gekennzeichnet,**
**dass** die mindestens zwei Laserstrahlenbündel (11, 12) zueinander unter einem Winkel geneigt sind, insbesondere unter einem spitzen Winkel, und geneigt auf das Werkstück (10) auftreffen.

12. Verfahren nach einem der Ansprüche 1 bis 11,
**dadurch gekennzeichnet,**
**dass** der Wirkungsabstand der mindestens zwei Laserstrahlenbündel (11, 12) zueinander konstant gehalten wird.

13. Verfahren nach einem der Ansprüche 1 bis 3,
**dadurch gekennzeichnet,**
**dass** zumindest zwei Laserstrahlenbündel (11, 12) in einem konstanten Abstand hintereinander auf einer gemeinsamen Oberflächenbahn (15) des Werkstücks (10) wirksam sind (Fig. 5) und bei der Relativbewegung zwischen dem Werkstück (10) einerseits und den Laserstrahlenbündeln (11, 12) andererseits nacheinander die gleiche Oberflächenbahn (15) des Werkstücks (10) beaufschlagen unter Steigerung der Tiefe der erfolgenden Wärmebehandlung, insbesondere der Härtetiefe.

14. Verfahren nach einem der Ansprüche 1 bis 13,
**dadurch gekennzeichnet,**
**dass** die mehreren Laserstrahlenbündel (11, 12) von einer Laserquelle erzeugt und von dieser ausgehend aufgeteilt und unterschiedlich gerichtet werden.

15. Verfahren nach einem der Ansprüche 1 bis 13,
**dadurch gekennzeichnet,**
**dass** die einzelnen Laserstrahlenbündel (11, 12) von jeweils zugeordneten eigenen Laserquellen erzeugt werden.
